# EUROPEAN PATENT SPECIFICATION

(11) **EP 1 210 161 B1**
(45) Date of publication and mention of the grant of the patent: **10.12.2003**
(21) Application number: 00956729.8
(22) Date of filing: 04.09.2000
(51) Int. Cl.: B01D 11/02

(54) **APPARATUS AND METHOD FOR EXTRACTING BIOMASS**
APPARAT UND METHODE ZUM EXTRAHIEREN VON BIOMASSE
APPAREIL ET PROCEDE D'EXTRACTION DE BIOMASSE

(30) Priority: 06.09.1999 GB 9920945
(43) Date of publication of application: 05.06.2002
(73) Proprietor: Ineos Fluor Holdings Limited, Southampton, Hampshire SO14 3BP (GB)
(72) Inventor: CORR, Stuart, Warrington, Cheshire WA4 5DH (GB); LOW, Robert, E., Northwich, Cheshire (GB); MURPHY, Frederick, Thomas, Frodsham, Cheshire WA6 7RY (GB); MORRISON, James, David, Northwich, Cheshire CW8 2QN (GB)
(74) Representative: Powell, Timothy John
(86) International application number: GB0003390
(87) International publication number: WO01017647

(56) References cited:
- US-A- 1 463 154
- PATENT ABSTRACTS OF JAPAN vol. 13, no. 326, 24 July 1989 (1989-07-24) & JP 01 104303 A (OGAWA KORYO KK), 21 April 1989 (1989-04-21)
- PATENT ABSTRACTS OF JAPAN vol. 12, no. 50, 16 February 1988 (1988-02-16) & JP 62 197103 A (KAWASAKI HEAVY IND LTD), 31 August 1987 (1987-08-31)
- PATENT ABSTRACTS OF JAPAN vol. 1995, no. 6, 31 July 1995 (1995-07-31) & JP 07 060002 A (MITSUBISHI CHEM CORP), 7 March 1995 (1995-03-07)

## Description

This invention concerns apparatuses and a method for "extraction" of biomass. This is the extraction of flavours, fragrances or pharmaceutically active ingredients from materials of natural origin (these materials being referred to as "biomass" herein).

Examples of biomass materials include but are not limited to flavoursome or aromatic substances such as coriander, cloves. star anise, coffee, orange juice. fennel seeds. cumin, ginger and other kinds of bark, leaves, flowers, fruit, roots, rhizomes and seeds. Biomass may also be extracted in the form of biologically active substances such as pesticides and pharmaceutically active substances or precursors thereto, obtainable e.g. from plant material, a cell culture or a fermentation broth.

There is growing technical and commercial interest in using near-critical solvents in such extraction processes. Examples of such solvents include liquefied carbon dioxide or, of particular interest, a family of chlorine-free solvents based on organic hydrofluorocarbon species.

By the term "hydrofluorocarbon" we are referring to materials which contain carbon, hydrogen and fluorine atoms only and which are thus chlorine-free.

Preferred hydrofluorocarbons are the hydrofluoroalkanes and particularly the C₁₋₄ hydrofluoroalkanes. Suitable examples of C₁₋₄ hydrofluoroalkanes which may be used as solvents include, inter alia, trifluoromethane (R-23), fluoromethane (R-41), difluoromethane (R-32), pentafluoroethane (R-125), 1,1,1-trifluoroethane (R-143a), 1,1,2,2-tetrafluoroethane (R-134), 1,1,1,2-tetrafluoroethane (R-134a), 1,1-difluoroethane (R-152a), heptafluoropropanes and particularly 1,1,1,2,3,3,3-heptafluoropropane (R-227ea), 1,1,1,2,3,3-hexafluoropropane (R-236ea), 1,1,1,2,2,3-hexafluoropropane (R-236cb), 1,1,1,3,3,3-hexafluoropropane (R-236fa), 1,1,1,3,3-pentafluoropropane (R-245fa), 1,1,2,2,3-pentafluoropropane (R-245ca), 1,1,1,2,3-pentafluoropropane (R-245eb), 1,1,2,3,3-pentafluoropropane (R-245ea) and 1,1,1,3,3-pentafluorobutane (R-365mfc). Mixtures of two or more hydrofluorocarbons may be used if desired.

R-134a, R-227ea, R-32, R-125, R-245ca and R-245fa are preferred.

An especially preferred hydrofluorocarbon for use in the present invention is 1,1,1,2-tetrafluoroethane (R-134a).

It is possible to carry out biomass extraction using other solvents, such as chlorofluorocarbons ("CFC"') or hydrochlorofluorocarbons ("HCFC's") and/or mixtures of solvents. CFC's and HCFC's are not approved for biomass extractions whose products are intended e.g. for food or medicine uses.

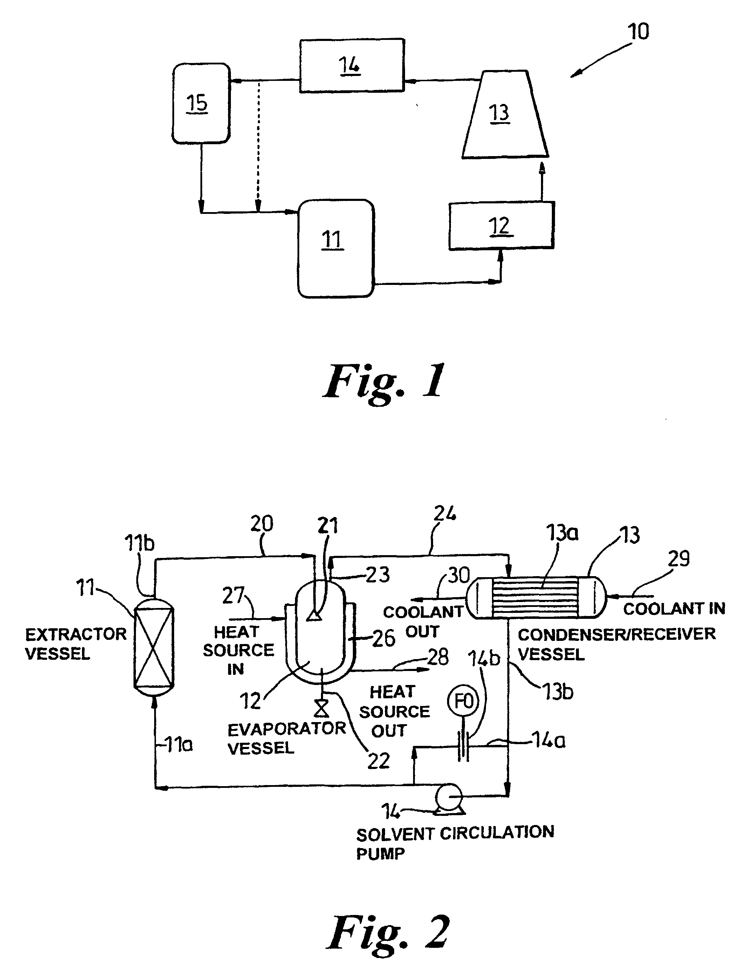

Known extraction processes using these solvents are normally carried out in closed-loop extraction equipment. A typical example 10 of such a system is shown schematically in Figure 1.

In this typical system, liquefied solvent is allowed to percolate by gravity in downflow through a bed of biomass held in vessel 11. Thence it flows to evaporator 12 where the volatile solvent vapour is vaporised by heat exchange with a hot fluid. The vapour from evaporator 12 is then compressed by compressor 13. The compressed vapour is next fed to a condenser 14 where it is liquefied by heat exchange with a cold fluid. The liquefied solvent is then optionally collected in intermediate storage vessel (receiver) 15 or returned directly to the extraction vessel 1 to complete the circuit.

A feature of this process is that the principal driving force for circulation of solvent through the biomass and around the system is the difference in pressure between the condenser/storage vessel and the evaporator. This difference in pressure is generated by the compressor. Thus to increase the solvent circulation rate through the biomass it is necessary to increase this pressure difference, requiring a larger and more powerful compressor.

The large difference in solvent liquid and vapour densities means that a modest increase in liquid circulation rate can require significant additional capital and operating cost because of this increase in compressor size. This means that the system designer has to compromise between the rate at which liquid can be made to flow through the biomass and the rate at which vapour can be compressed.

The basic vapour compression/extraction process described above works well if the solvent fluid being used also has a good balance of thermophysical properties for use as a working fluid in a refrigeration/heat pump cycle. There are however several disadvantages to the use of such a cycle, even if the solvent properties make it an attractive refrigerant working fluid.

The principal drawback to use of the above process is the need to use a compressor. For many of the commercially attractive extracts the end use is as an ingredient of a food, personal care product or medicine. Contamination of the extract with compressor lubricating oil is therefore unacceptable. Although it is possible to obtain some food-grade lubricant materials, if used in a conventional compressor these will still contaminate and dilute the extract to some degree. The safe solution (especially in designing a multi-purpose batch extraction plant) is to use a special design of compressor which either does not use lubricating oil or enforces a rigorous physical seal between any oiled parts and the fluid being compressed.

It is possible to obtain such machines; however they are expensive. The materials of construction used for such machines are typically stainless steel with PTFE-based seals, which means that these units are significantly more expensive than conventional, mass-produced refrigeration compressors. Therefore the capital cost implications for a process designer are significant.

If furthermore the solvent being used has a high vapour pressure (for example liquefied carbon dioxide) then there are further capital cost implications because the compressor may need to be a multi-stage device. The variable (operating) cost of using the process will also increase as the pressure difference over the compressor increases.

Finally, the use of the vapour compression/extraction process outlined above will normally require that the process be fitted with a pressure relief device, to protect against the accidental over-pressure of the system by maloperation of the equipment with e.g. the compressor operating against a closed system. This requires that the relief device be vented to a safe location and there is always then potential for loss of charge through the relief stream, with a consequent loss of production time and cost of replacing the solvent, cleaning the system etc.. as well as the potential environmental hazards associated with discharging solvents and extract/solvent mixtures from the apparatus.

According to a first aspect of the invention there is provided apparatus as defined in Claim 1.

An advantage of this arrangement is that the absence of a compressor permits the design of a circuit whose design pressure could be selected to cope with the maximum attainable vapour pressure in the system, removing the need for external pressure relief devices; or at least minimising the frequency and reducing the magnitude of relief events.

In one embodiment of the invention the extraction vessel, evaporator and condenser are discrete components operatively interconnected by a pipework circuit.

In other embodiments of the invention the evaporator and condenser are contained within the same vessel, sometimes referred to as a "short-path still". Claims 3 to 15 define preferred arrangements of the short-path still type of vessel.

An essential feature of the invention is that the condenser is at a greater altitude than the extraction vessel and the evaporator, whereby the means for moving liquid solvent between the condenser and the extraction includes the hydrostatic head between the condenser and the extraction vessel.

Such a gravity flow embodiment includes a liquid lute operatively connected in series with the condenser, on the outlet side thereof. The liquid lute advantageously provides a liquid seal on the outlet side of the condenser and may be used to provide subcooling of the liquid solvent.

Preferably the means, defined in Claim 1, for moving the liquid solvent from the condenser to the extraction vessel additionally includes a liquid pump operatively connected in series in the closed loop circuit between the condenser and the extraction vessel. Since pumping a liquid requires much less energy than pumping a vapour, the running cost of the pump is much lower than that of the compressor in a typical closed-loop extraction process. The capital cost of the pump will also normally be lower than that of the compressor.

According to a second aspect of the invention there is provided a method according to Claim 17. This method may conveniently be practised using apparatus as defined herein.

The method involves gravity flow of the liquid solvent. Optionally the method may additionally include pumping the liquid solvent between the condenser and the extraction vessel.

Especially when the method includes pumping of liquid solvent as aforesaid, the method may be such that the steps of evaporating and condensing the solvent take place within the same hollow vessel. Thus this part of the method may suitably take place in a short-path still - as described herein.

The method typically includes the steps of packing biomass in the extraction vessel, thereby achieving a high biomass density.

The method of the invention also includes removal of biomass extract from the evaporator, as desired.

There now follows a description of preferred embodiments of the invention, by way of non-limiting example, with reference being made to the accompanying drawings in which:
Figure 1 is a schematic representation of a prior art biomass extraction circuit, described hereinabove;
Figure 2 is a schematic representation of a first embodiment of apparatus that does not constitute the invention but may provide a basis for implementation thereof;
Figure 3 is a schematic representation of an embodiment of closed-loop apparatus, according to the invention, in which gravity flow obviates the need for the pump of Figure 2;
Figure 4 is a schematic, vertically sectioned view of a first embodiment of short-path still, according to the invention, that may optionally replace some components of the Figure 2 apparatus;
Figure 5 is a schematic, vertically sectioned view of a second embodiment of short-path still, that is an alternative to the Figure 3 still;
Figure 6 is a Mollier plot (pressure-enthalpy diagram) illustrating the behaviour of the solvent in the stills of Figures 4 and 5;
Figure 7 shows an alternative form of short-path still; and
Figure 8 shows a biomass extraction circuit including a short-path still and heat regeneration.

Referring to Figure 2 there is shown a closed loop biomass extraction circuit. The circuit includes, operatively connected in series, an extraction vessel 11 for containing biomass, that permits a solvent or a solvent mixture to contact biomass therein to effect biomass extraction.

Vessel 11 is an elongate, hollow, upright cylinder substantially closed at either end. It includes a solvent inlet 11a at its lower end and a solvent/biomass extract outlet 11b at its upper end.

Outlet 11b is connected via line 20 to evaporator 12. Line 20 supplies a solvent/extract liquor to the interior of evaporator 20, that is a hollow vessel that is substantially closed, via nozzle 21 secured to the terminus of line 20 inside evaporator 12.

As described below, evaporator 12 separates the solvent from the biomass extract. Evaporator 12 has a liquid drain 22 at substantially its lowermost point, and a vapour outlet 23, for solvent in vapour form, at or near its highest point.

Outlet 23 is connected, via line 24, to condenser/receiver vessel 13, in which solvent vapour condenses in use of the apparatus to liquid form. Unlike the prior art arrangement of Figure 1, the Figure 2 circuit omits a compressor between the evaporator and the condenser.

Condenser/receiver 13 includes an outlet 13b for liquid solvent. Outlet 13b connects to pump 14 that, in use of the apparatus, pumps liquid solvent to the inlet 11a of extraction vessel 11. Pump 13 includes an optional solvent recirculation loop 14a including a flow restrictor in the form of orifice plate 14b.

The exterior of evaporator 12 is at least partly surrounded by a heater jacket 26. Heater jacket includes one or more ducts for a warm or hot fluid, that is supplied to jacket 26 via inlet pipe 27 and that exits via outlet pipe 28. The hot fluid circulates around jacket 26 in use of the apparatus to evaporate solvent in evaporator 12.

Condenser/receiver 13 includes another heat pump, in which a fluid coolant, supplied via inlet 29, circulates in one or more pipes 13a in vessel 13 to cause condensation therein of solvent before exiting the vicinity of condenser/receiver vessel 13 via outlet pipe 30.

Before use of the Figure 2 apparatus, the extraction vessel 11 is charged with a bed of biomass; and the circuit filled to a requisite level with solvent such as 1,1,1,2-tetrafluoroethene.

The operation of the Figure 2 arrangement is similar to the process outlined above in relation to Figure 1, except that solvent vapour is led directly to condenser unit 13 which is fed with a cold coolant fluid. The condensed solvent is then circulated by pump 14 back to the extractor vessel, thence to the evaporator. During this process the solvent removes extract from the vessel 11 and entrains it to the evaporator 12.

During or after operation of the apparatus the biomass extract is drained from the evaporator 12, for subsequent further commercial processing.

Solvent vapour, evaporated from the solvent/extract mixture in evaporator 12, is condensed in condenser/receiver 13 and then pumped to extraction vessel 11 for further contact with biomass therein.

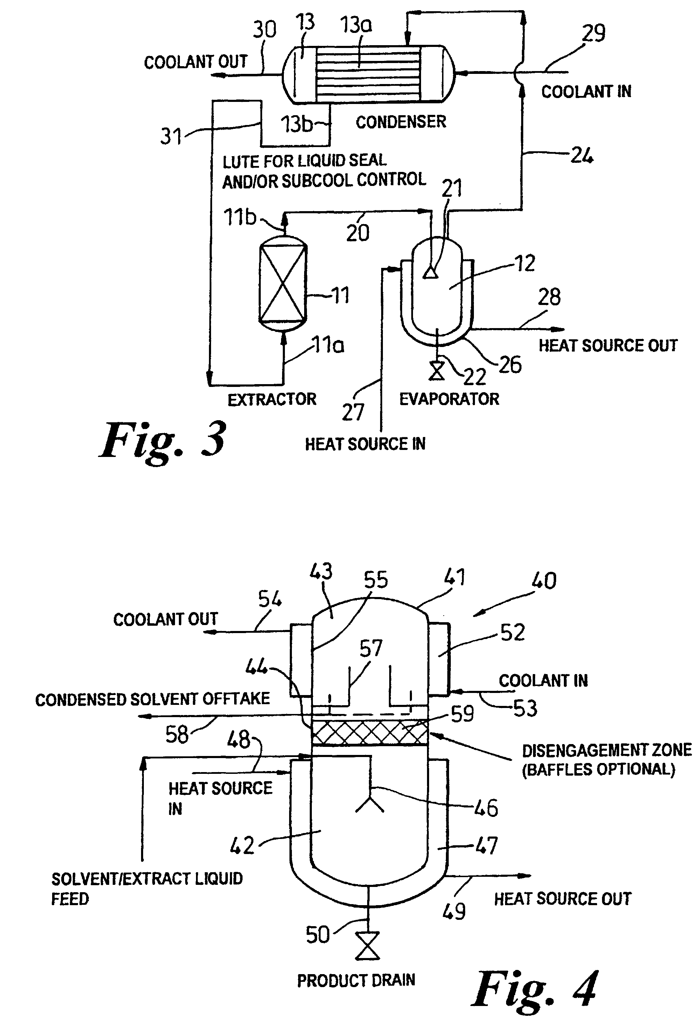

An alternative embodiment. obviating the need for pump 14, is shown in Figure 3. Thus in this embodiment a gravity flow arrangement is used. The circulation rate of the solvent is then determined by the net hydrostatic head available between the condenser and evaporator. This design may be preferred for larger scale equipment where the physical size of equipment means that an elevated structure will be used in any event.

In Figure 3 the extraction vessel 11, evaporator 12 and condenser 13 are substantially the same as in the Figure 2 embodiment. The components shown in both Figures 2 and 3 function in essentially the same way as between the two embodiments, and are not therefore described again in relation to Figure 3. Pump 14 is omitted because condenser 13 is raised relative to the remainder of the closed loop circuit. The resulting net hydrostatic head is sufficient in use of the Figure 3 apparatus to supply liquid solvent to and through the biomass, and to the nozzle 21 in evaporator 12.

The Figure 3 embodiment includes a fluid lute 31 formed in the outlet pipework connecting the condenser 13 and extraction vessel 11. The fluid lute 31 ensures a liquid seal on the outlet side of condenser 13 and may be used for subcooling the solvent therein.

In both the Figure 2 and Figure 3 embodiments the energy efficiency of the cycle can be greatly improved by using an external heat pump device. (Either vapour compression or absorption cycle devices are suitable.) This could be used with a direct arrangement (with the working fluid of the heat pump acting as the condenser cooling medium and the evaporator heating medium) or could be used with a secondary coolant circuit. If for example the chosen working fluid for the heat pump were not of food/medical purity then added security against tube leakages into the solvent extraction circuit would be offered by using a secondary coolant system of food-grade solvent.

Figure 4 shows another embodiment of the invention. This combines the evaporation and condensation steps within a single vessel. The vessel is then acting as a single stage still; this is an example of so-called "short-path" distillation. The short-path still 40 of Figure 4 may be connected into at least the Figure 2 circuit in place of the evaporator 12, condenser 13 and the pipework associated with these components.

The vessel 41 defining the short-path still is an upright, hollow, substantially closed cylinder having lower 42 and upper 43 interior zones spaced vertically from one another by a disengagement zone 44.

The lower zone 42 includes an evaporator stage and the upper zone 43 a condenser.

The lower zone includes a feed 46 thereinto for liquid/solvent extract mixture; a heat source (such as external heater jacket 47, having internal fluid circulation pipes); warm/hot fluid inlet and outlet pipes 48, 49 and a drain 50 for collection of biomass extract from the evaporator stage.

The condenser in the upper zone 43 includes a cooler in the form of external cooling jacket 52 having internal fluid coolant pipes and coolant fluid inlet and outlet pipes 53,54.

In use the cooler cools a surface of the upper zone, this in the Figure 4 being the interior wall 55 of upper zone 43. A receptacle in the form of annular tray 57 is for collecting condensed solvent from the wall 55 at the bottom of upper zone 43. A solvent drain 58 drains liquid solvent from the receptacle for supply to extraction vessel 11 via pump 14.

During operation of a circuit including the short-path still 40 of Figure 4, the solvent evaporation stage takes place in lower zone 42 of the vessel. Solvent vapour rises and flows through disengagement zone 44 (where the vapour velocity is sufficiently low to prevent droplet entrainment) and then passes through a vapour gap (or gaps) to the upper zone 43 of the vessel. The condensed solvent is collected in a tray 57. Liquid solvent is then drawn off the tray as required and returned to the extraction system.

The disengagement zone can be an empty vessel section or optionally may include a gas permeable, generally liquid impermeable barrier such as baffles or wire mesh 59 to discourage any liquid entrainment. The liquid offtake from the condenser storage tray 57 is led through a lute to provide a liquid seal for the system.

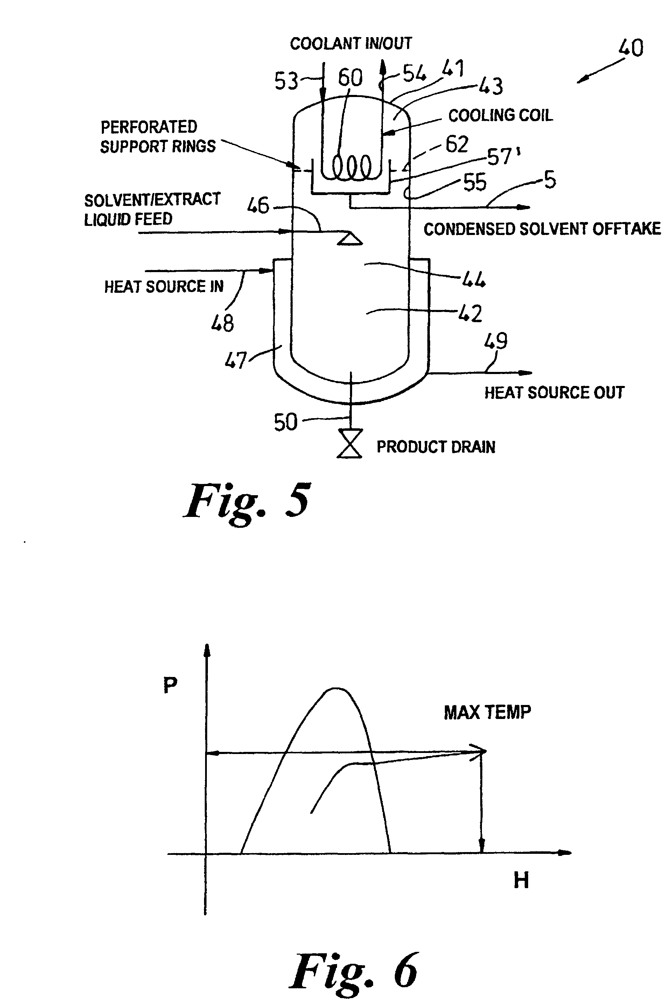

An alternative short-path still is shown in Figure 5, where in place of a cooling jacket an internal cooling coil 60 is employed, the other principles shown in Figure 4 being unaltered. This arrangement may allow for different coolants to be employed according to need and could also offer a way of using a large surface area for the condenser in a compact space.

The Figure 5 arrangement includes a cup-like receptacle 57' under the centrally suspended cooling coil 16. The receptacle 57' is supported on one or more perforated support rings 62 interconnecting the receptacle 57' and inner wall 55. The support rings permit the flow of gaseous solvent into upper zone 43.

In Figure 5 the surface onto which the solvent condenses is of course the outer surface of coil 60, hence the modified shape and location of the receptacle 57'.

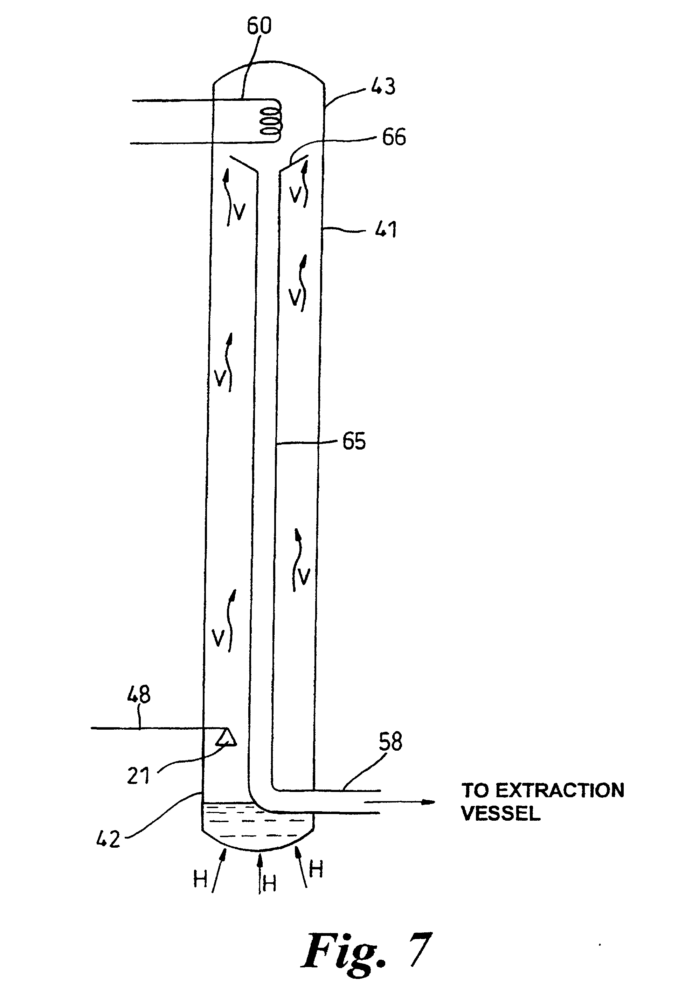

Another form of short-path still, according to the invention, is shown in Figure 7.

This embodiment employs the cooling coil 60 of Figure 5, but the still cylinder 41 is more elongate than the Figure 4 and 5 embodiments.

The receptacle of Figures 4 and 5 is in Figure 7 replaced by an elongate tube 65 extending parallel to and concentric with cylinder 41.

In use the solvent/extract mixture delivered by pipe 48 and nozzle 21 is heated in lower zone 42, as signified schematically by arrows H. Solvent vapour rises in the cylinder 41, as illustrated by arrows V in Figure 7, to upper zone 43. In upper zone 43 the solvent condenses onto the coil 60 and falls into an open funnel 66 secured to the open, upper end of tube 65. Condensed solvent passes down tube 65 and is fed to the remainder of the extraction circuit via pipe 58.

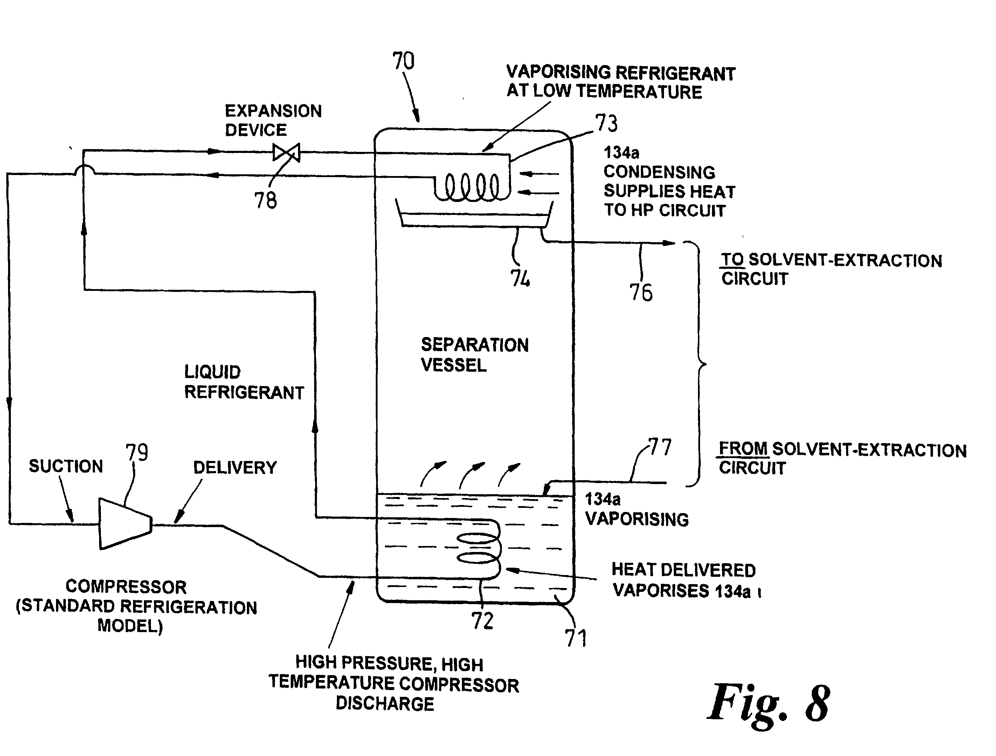

The direct heat pump embodiment is illustrated in Figure 8. This shows a separation vessel 70 which contains a pool 71 of boiling solvent and extracted oils. The vessel 70 is fitted with two heat exchangers or coils, one 72 situated close to the bottom of the vessel forming a lower heat exchanger and one 73 close to the top of the vessel forming an upper heat exchanger.

The vessel 70 contains a quantity of solvent and extract in solution forming a pool 71 at the bottom by virtue of its density.

The purpose of the lower heat exchanger coil 72 is to provide heat to the pool 71 in order to vaporise the more volatile solvent fraction and thus fill the cavity of the vessel 70 with the vapour so produced.

The purpose of the upper heat exchanger coil 73 is to condense this vapour into liquid form. An open-topped collection vessel 74 is arranged to be below the condensing coil in order to collect solvent condensed on the coil.

Principally pure solvent collected in this way is fed via line 76 to a solvent extraction circuit such as the remainder of the Figure 3 circuit not constituted by evaporator 12 and condenser 13. From the solvent extractor circuit, a solution of solvent and extract in solution is fed via line 77 from the solvent extraction circuit to the bottom of the separation vessel 70. The heat exchangers are arranged in the vessel such that solvent vapour is produced by the application of heat to the pool 71 of solvent and dissolved extract oil. The vapour fills the vessel 70 and is condensed on the upper heat exchanger principally as pure solvent, to be fed to the solvent extraction circuit via line 76. Solvent and dissolved oil extracts are returned from the solvent extraction circuit to the pool of liquid in the bottom of the extraction vessel so that the process is continuous.

The solvent extraction circuit referred to above may either be an external circuit formed from pipework and components or could be an internal circuit formed in the body of the separation vessel itself. In the latter case the vessel would contain all the components previously described, but would also contain a quantity of raw biomass at approximately its mid section such that the solvent condensed on the upper coil permeated or flowed through the body of the raw biomass, thus extracting the required oils. This solvent and oils mixture would then pass into the pool at the bottom of the vessel. In the case of an internal solvent extraction circuit provision would need to be made to allow the evaporating solvent from the pool to pass freely to the upper heat exchange coil, past the bulk of biomass situated in the vessel mid section as described.

Heat is supplied and extracted from the vessel by means of a separate vapour compression circuit which operates using the two heat exchangers 72, 73 previously described, an expansion device 78 such as a restriction or valve and a standard refrigeration compressor 79. This circuit may be filled with an HFC, CFC, HCFC or similar refrigerant.

High pressure high temperature vapour is supplied to the lower heat exchanger coil 72 in the bottom of the separation vessel by the compressor. The heating coil forms the 'condenser' in the refrigeration circuit. Once the refrigerant is condensed into liquid form it is made to pass through an expansion device 78 where it changes state into a two phase liquid vapour mixture at low temperature and pressure. This fluid is fed into the upper heat exchanger coil 73 at the top of the separation vessel in order to condense the 134a solvent. This coil forms the 'evaporator' of the separate vapour compression circuit.

From the evaporator the vapour then passes to the low pressure inlet of the compressor 79 where it is compressed to high pressure and temperature, for onward passage to the high temperature coil as before.

The total heat rejected at the upper heat exchanger 73 is approximately equal to the heat supplied to the lower heat exchanger plus the energy input to the compressor. In this way the energy supplied to the system as a whole is effectively minimised.

The vessel 70 in Figure 8 is thus another example of a short-path still, whose basic operation is similar to that of the Figure 4 arrangement, and a direct heat pump.

Although use of an external vapour compression heat pump would add to the cost of the process the costs should be lower than using a compressor in the solvent circuit, because it is then possible to use a less expensive, mass produced refrigeration compressor and standard components, with no requirement either for costly materials of construction nor for sophisticated oil management features.

It is in addition possible then to use the optimal refrigerant/working fluid for the heat recovery duty, independent of the solvent desired for the extraction process. This removes the requirement for good solvency and good heat pump cycle efficiency in one and the same solvent.

By using a process of the type described above, especially in the case where a short-path still is used but equally applicable where separate condenser and evaporator vessels are employed, it is possible to protect against system overpressure by intrinsically safe design principles.

If evaporator and condenser are considered together as a closed system, and there are no valves in the pipework between the vessels, they can be thought of as forming a single containment volume, in which a fixed maximum mass of solvent can be present. This mass is determined by the charge of solvent put into the system. If the evaporator and condenser are isolated from any other vessel then, if the heat supplied by the heating system is not balanced by the heat removed through the cooling system and through natural heat losses, then the pressure will rise in the two vessels. This pressure rise will take place at constant density (since no mass can enter or leave the fixed volume) and it will initially take place in the saturated, two-phase region of the solvent's thermodynamic property map. The pressure will follow a line of constant density ("isochore") through the two-phase region as shown in Figure 6.

If a sufficient fraction of the volume in normal operation is vapour (and this can be selected by careful design) then ultimately there will be a point at which the entire liquid inventory has been turned to vapour. As heat is supplied beyond this point the pressure will continue to rise, along the isochore. However because the vapour is now superheated the rate of pressure rise will be greatly lessened. The ultimate pressure attainable will be determined by the maximum temperature of the heat source. If this is water supplied from a tank at atmospheric pressure, for example, the maximum feasible heat supply temperature is 100 C.

The potential benefit of this can be seen by considering 1,1,1,2-tetrafluoroethane ("R-134a") as the solvent, with warm water as a heat source. If the initial conditions are a vapour volume fraction of 75 % and a starting temperature of 20 C, the system density is 36.76 kg/m³ and the normal system pressure would be 5.72 bara. The vapour pressure of R-134a at 100 C is 40 bara. However, the pressure corresponding to a saturated vapour density of 36.76 kg/m³ is 7.6 bara (temperature of 29.3C). The maximum pressure attained (when the vapour temperature is 100C and the density is 36.76 kg/m³) is only 10.1 bara.

If the above calculation is repeated with a starting vapour volume fraction of 50% then the initial density is 54.3 kg/m³ and the final attained pressure is 14.25 bara.

This principle can be extended to provide complete protection for the system by taking into account the whole liquid inventory of the extractor and associated pipework when sizing the condenser and evaporator vessels.

The intrinsic safety benefit offered by the natural circulation process (i.e. the solvent process without compressor or solvent circulation pump) is thus the ability to select a reasonable design pressure which gives protection against overpressure through heat input without need for costly pressure relief. It also offers potential to reduce the design pressure of the vessels below that indicated by the vapour pressure of working fluid at maximum temperature alone, although the maximum potential liquid fill and hence final attainable pressure of the vessel needs to be allowed for in making this judgement.

### Summary of Benefits of the Invention

- Avoids need for costly oil-free compressor of exotic construction
- Simple system suited to heat integration using inexpensive and optimised heat pump rather than compromising selection of solvent for particular extraction
- Combination of evaporation and condensation in single vessel to save on capital cost of pressure vessels.
- Simple method of providing intrinsic safety through careful selection of process vessel sizes.

## Claims

1. Apparatus for extracting biomass comprising a closed loop circuit including, operatively connected in series, an extraction vessel (11), for containing biomass, that permits the solvent or a solvent mixture to contact biomass to effect extraction;
an evaporator (12) for separating solvent and biomass extract from one another;
a condenser (13) for condensing solvent evaporated in the evaporator; and
a means for moving liquid solvent from the condenser to the extraction vessel and to the evaporator, without compressing a vapour phase;
wherein the condenser (13) is at a greater altitude than the extraction vessel (11) and the evaporator (12), whereby the means for moving liquid solvent between the condenser (13) and the extraction vessel (11) includes the hydrostatic head between the condenser (13) and the extraction vessel (11); and
wherein the outlet of the condenser (13) includes a liquid lute (31) operatively connected in series therewith.

2. Apparatus according to Claim 1 wherein the extraction vessel (11), evaporator (12) and condenser (13) are discrete components operatively interconnected by a pipework circuit (11a,11b,20,24,13b,14,14a).

3. Apparatus according to Claim 1 wherein the evaporator (12) and condenser (13) are constituted as parts of the same evaporator/condenser vessel (40), and the extraction vessel is a discrete component operatively connected to the evaporator/condenser vessel (40) by a pipework circuit.

4. Apparatus according to Claim 3 wherein the evaporator/condenser vessel (40) is a generally closed, hollow vessel (41) having lower (42) and upper (43) interior zones spaced from one another, the lower zone (42) including the evaporator and the upper zone (43) including the condenser.

5. Apparatus according to Claim 4 wherein the lower zone includes a feed (46) thereinto for liquid solvent/extract mixture; a heat source (47) for heating the liquid solvent/extract mixture to evaporate the solvent from the extract; and a drain (50) for draining liquid extract out of the condenser/evaporator vessel.

6. Apparatus according to Claim 5 wherein the heat source is or includes a heating jacket (47) or a member secured onto or surrounding a portion of the exterior of the condenser/evaporator vessel (41) adjacent or corresponding to the lower zone (42).

7. Apparatus according to Claim 4 or any claim dependent therefrom, wherein the upper zone (43) includes a cooler (52) that cools one or more surfaces (55) in the upper zone; a receptacle (57) lower than the surface and located to catch liquid solvent, condensed onto the surface (55), that falls from the surface under gravity; and a drain (50) for draining liquid solvent from the receptacle.

8. Apparatus according to Claim 7 wherein the cooler includes a jacket (52) or member secured onto or surrounding a portion of the exterior of the vessel (41) adjacent or corresponding to the upper zone (43), an interior wall (55) of the upper zone, cooled by the cooling jacket or member, being or including the said surface and the receptacle including a tray (57) protruding from the said wall inside the vessel.

9. Apparatus according to Claim 8 wherein the upper zone (43) is of cylindrical cross-section and the tray (57) is an annulus protruding from and extending about the interior wall of the upper zone (43).

10. Apparatus according to Claim 7 wherein the cooler includes a cooling member (60) within the upper zone; the cooling member including the said surface; and the receptacle (57') underlying the cooling member.

11. Apparatus according to any of Claims 7 to 10 wherein the cooling jacket (52) or member (60) includes one or more internal passages permitting the flow therethrough of a cooling fluid.

12. Apparatus according to any of Claims 7 to 11 wherein the drain (50) passes through a wall of the evaporator/condenser vessel (41) and wherein the closed loop circuit includes the lower zone (42), the upper zone (43) and the drain (50), operatively connected in series.

13. Apparatus according to Claim 4 or any claim dependent therefrom wherein the lower (42) and upper (43) zones are spaced from one another by a gas permeable, generally liquid impermeable barrier (59).

14. Apparatus according to Claim 5 wherein the heat source is or includes a heating member (72) within the condenser/evaporator vessel (41).

15. Apparatus according to Claim 3 or any claim dependent therefrom, including a direct heat pump for evaporating and condensing the solvent.

16. Apparatus according to any preceding claim wherein the means for moving liquid solvent from the condenser to the extraction vessel includes a liquid pump (14) operatively connected in series in the closed loop circuit between the condenser (13) and the extraction vessel (11).

17. A method of extracting biomass comprising the steps of :
loading a bed of biomass into an extraction vessel (11) having an inlet (11a) and an outlet (11b) and forming part of a closed loop circuit including, operatively connected in series, the extraction vessel (11), an evaporator (12) and a condenser (13);
contacting the biomass with a solvent flowing around the closed loop, whereby biomass extract becomes entrained with the solvent;
moving the solvent around the closed loop to the evaporator (12) and evaporating the solvent to separate the solvent and the extract from one another;
moving the vaporised solvent around the closed loop to the condenser (13) and condensing it to liquid form; and
moving the condensed solvent around the closed loop via a liquid lute operatively connected in series with the condensor (13) to the extraction vessel (11) for further contact with biomass therein, wherein the solvent in vapour form is generally uncompressed; and wherein the method includes the step of allowing the condensed, liquid solvent to move under gravity between the condenser (13) and the extraction vessel (11).

18. A method according to Claim 17 wherein the steps of evaporating and condensing the solvent take place within the same hollow vessel (41).

19. A method according to Claim 18 including the step of operating a direct heat pump to effect the said evaporating and condensing.

20. A method according to any of Claims 17 to 19 including the step of packing the biomass in the extraction vessel (11).

21. A method according to any of Claims 17 to 20 including the step of removing biomass extract from the evaporator (12).

## Patentansprüche

1. Apparatur zur Extraktion von Biomasse, umfassend einen Kreislauf aus einer geschlossenen Schleife, der wirkmäßig in Reihe geschaltet einschließt ein Extraktionsgefäß (11) für die Aufnahme der Biomasse, das es dem Lösemittel oder der Lösemittelmischung ermöglicht, mit der Biomasse zur Bewirkung der Extraktion in Kontakt zu treten,
einen Verdampfer (12) zur Trennung des Lösemittels und des Extraktes der Biomasse voneinander,
einen Verflüssiger(13) zur Kondensierung des im Verdampfer verdampften Lösemittels, und
eine Einrichtung zur Bewegung von flüssigem Lösemittel vom Verflüssiger zum Extraktionsgefäß und zum Verdampfer ohne die Komprimierung einer Dampfphase,
wobei sich der Verflüssiger (13) in größerer Höhe befindet als das Extraktionsgefäß (11) und der Verdampfer (12), wobei die Einrichtung zur Bewegung von flüssigem Lösemittel zwischen dem Verflüssiger (13) und dem Extraktionsgefäß (11 ) den hydrostatischen Kopf zwischen dem Verflüssiger (13) und dem Extraktionsgefäß (11) einschließt, und
wobei der Auslass des Verflüssigers (13) eine Flüssigdichtung (31) einschließt, die wirkmäßig mit diesem in Reihe geschaltet ist.

2. Apparatur nach Anspruch 1, wobei das Extraktionsgefäß (11), der Verdampfer (12) und der Verflüssiger (13) getrennte Komponenten sind, die über einen Kreislauf aus Rohrleitungen (11a, 11b, 20, 24, 13b, 14, 14a) wirkmäßig miteinander verbunden sind.

3. Apparatur nach Anspruch 1, wobei der Verdampfer (12) und der Verflüssiger (13) als Teile desselben Verdampfer/Verflüssiger-Gefäßes (40) vorliegen und das Extraktionsgefäß eine eigene Komponente ist, die mit dem Verdampfer/Verflüssiger-Gefäß (40) übereinen Kreislauf aus Rohrleitungen wirkmäßig verbunden ist.

4. Apparatur nach Anspruch 3, wobei das Verdampfer/Verflüssiger-Gefäß (40) ein im Großen und Ganzen geschlossenes Hohlgefäß (41) mit unteren (42) und oberen (43) inneren Zonen ist, die entfernt voneinander angeordnet sind, wobei die untere Zone (42) den Verdampfer einschließt und die obere Zone (43) den Verflüssiger einschließt.

5. Apparatur nach Anspruch 4, wobei die untere Zone eine in sie führende Zuleitung (46) für die flüssige Mischung aus Lösemittel und Extrakt einschließt, eine Wärmequelle (47) zur Erhitzung der flüssigen Mischung aus Lösemittel und Extrakt für die Abdampfung des Lösemittels aus dem Extrakt, und einen Ablauf (50) für das Ablassen des flüssigen Extrakts aus dem VerflüssigerNerdampfer-Gefäß.

6. Apparatur nach Anspruch 5, wobei die Wärmequelle ein Heizmantel (47) ist oder einen solchen einschließt oder ein Bauteil ist oder ein solches einschließt, der bzw. das an einem Abschnitt der Außenseite des Verflüssiger/Verdampfer-Gefäßes (41), der an die untere Zone (42) angrenzt oder dieser entspricht, befestigt ist oder sie umgibt.

7. Apparatur nach Anspruch 4 oder einem beliebigen der von ihm abhängigen Ansprüche, wobei die obere Zone (43) einen Kühler (52) einschließt, der eine oder mehrere Oberfläche(n) (55) in der oberen Zone kühlt; ein niedriger als die Oberfläche liegendes Sammelgefäß (57), das so angeordnet ist, dass es flüssiges Lösemittel auffangen kann, das auf der Oberfläche (55) kondensiert ist und unter dem Einfluss der Schwerkraft von der Oberfläche fällt, und einen Ablauf (50) für das Ablassen des flüssigen Lösemittels aus dem Sammelgefäß.

8. Apparatur nach Anspruch 7, wobei der Kühler einschließt einen Mantel (52) oder ein Bauteil, der bzw. das an einem Abschnitt der Außenseite des Gefäßes (41), der an die obere Zone (43) angrenzt oder dieser entspricht, befestigt ist oder ihn umgibt, eine innere Wand (55) der oberen Zone, die vom Kühlmantel oder Bauteil gekühlt wird, die die genannte Oberfläche darstellt oder einschließt, und das Sammelgefäß einschließlich einer Schale (57), die aus der genannten Wand im Inneren des Gefäßes hervor ragt.

9. Apparatur nach Anspruch 8, wobei die obere Zone (43) einen zylindrischen Querschnitt hat und die Schale (57) ein Ringraum ist, der aus der inneren Wand der oberen Zone (43) hervor ragt und sich um diese herum erstreckt.

10. Apparatur nach Anspruch 7, wobei der Kühler ein Kühlelement (60) in der oberen Zone einschließt, das Kühlelement die genannte Oberfläche einschließt und das Sammelgefäß (57') unter dem Kühlelement liegt.

11. Apparatur nach einem beliebigen der Ansprüche 7 bis 10, wobei der Kühlmantel (52) oder das Kühlelement (60) einen inneren Durchlass oder mehrere innere Durchlässe einschließt, durch den bzw. durch die ein Strom einer Kühlflüssigkeit fließen kann.

12. Apparatur nach einem beliebigen der Ansprüche 7 bis 11, wobei der Ablauf (50) durch eine Wand des Verdampfer/Verftüssiger-Gefäßes (41) tritt und wobei der Kreislauf aus der geschlossenen Schleife die untere Zone (42), die obere Zone (43) und den Ablauf (50), die wirkmäßig in Reihe geschaltet sind, einschließt.

13. Apparatur nach Anspruch 4 oder einem beliebigen der von ihm abhängigen Ansprüche, wobei die untere Zone (42) und die obere Zone (43) durch eine gasdurchlässige, im Großen und Ganzen flüssigkeitsundurchlässige Sperre (59) voneinander getrennt sind.

14. Apparatur nach Anspruch 5, wobei die Wärmequelle ein Heizelement (72) im Verflüssiger/Verdampfer-Gefäß (41) ist oder einschließt.

15. Apparatur nach Anspruch 3 oder einem beliebigen der von ihm abhängigen Ansprüche, die eine direkte Wärmepumpe für die Verdampfung und Verflüssigung des Lösemittels einschließt.

16. Apparatur nach einem beliebigen der vorangehenden Ansprüche, wobei die Einrichtung zur Bewegung des flüssigen Lösemittels vom Verflüssiger zum Extraktionsgefäß eine Flüssigkeitspumpe (14) einschließt, die wirkmäßig in Reihe mit dem Kreislauf aus der geschlossenen Schleife zwischen dem Verflüssiger (13) und dem Extraktionsgefäß (11) geschaltet ist.

17. Verfahren zur Extraktion von Biomasse, das die folgenden Schritte umfasst:
Laden eines Bettes aus Biomasse in ein Extraktionsgefäß (11) mit einem Einlass (11a) und einem Auslass (11b), das einen Teil eines Kreislaufes aus einer geschlossenen Schleife darstellt, derwirkmäßig in Reihe geschaltet das Extraktionsgefäß (11), einen Verdampfer (12) und einen Verflüssiger (13) einschließt,
Inkontaktbringen der Biomasse mit einem Lösemittel, das in dergeschlossenen Schleife fließt, wodurch der Extrakt der Biomasse mit dem Lösemittel mitgerissen wird,
Bewegen des Lösemittels in der geschlossenen Schleife zum Verdampfer (12) und Verdampfen des Lösemittels, um das Lösemittel und den Extrakt voneinander zu trennen,
Bewegen des verdampften Lösemittels in der geschlossenen Schleife zum Verflüssiger (13) und Kondensieren des Lösemittels in die flüssige Form, und
Bewegen des kondensierten Lösemittels in der geschlossenen Schleife über eine Flüssigdichtung, die wirkmäßig in Reihe mit dem Verflüssiger (13) geschaltet ist, zum Extraktionsgefäß (11) für einen weiteren Kontakt mit der darin befindlichen Masse, wobei das Lösemittel in Dampfform im Großen und Ganzen nicht komprimiert ist, und wobei das Verfahren den Schritt des Zulassens der Schwerkraft-abhängigen Bewegung des kondensierten, flüssigen Lösemittels zwischen dem Verflüssiger (13) und dem Extraktionsgefäß (11) einschließt.

18. Verfahren nach Anspruch 17, wobei die Schritte des Verdampfens und Verflüssigens des Lösemittels in demselben Hohlgefäß (41) stattfinden.

19. Verfahren nach Anspruch 18, das den Schritt des Betreibens einer direkten Wärmepumpe zur Bewirkung der genannten Verdampfung und Verflüssigung einschließt.

20. Verfahren nach einem beliebigen der Ansprüche 17 bis 19, das den Schritt des Packens der Biomasse in das Extraktionsgefäß (11) einschließt.

21. Verfahren nach einem beliebigen der Ansprüche 17 bis 20, das den Schritt des Entfernens des Extraktes der Biomasse aus dem Verdampfer (12) einschließt.

## Revendications

1. Appareil pour extraire la biomasse comprenant un circuit en boucle fermée comprenant, connecté de manière opérationnelle en série, un récipient d'extraction (11), pour contenir la biomasse, qui permet au solvant ou à un mélange de solvants d'entrer en contact avec la biomasse pour effectuer l'extraction ;
un évaporateur (12) pour séparer le solvant et l'extrait de biomasse l'un de l'autre ;
un condenseur (13) pour condenser le solvant évaporé dans l'évaporateur ; et
des moyens pour déplacer le solvant liquide depuis le condenseur vers le récipient d'extraction et vers l'évaporateur, sans comprimer une phase vapeur ;
dans lequel, le condenseur (13) est situé à une plus haute altitude que le récipient d'extraction (11) et l'évaporateur (12), moyennant quoi les moyens pour déplacer le solvant liquide entre le condenseur (13) et le récipient d'extraction (11) comprennent une tête hydrostatique entre le condenseur (13) et le récipient d'extraction (11) ; et
dans lequel la sortie du condenseur (13) comprend un lut liquide (31) connecté de manière opérationnelle en série avec ce dernier.

2. Appareil selon la revendication 1 dans lequel le récipient d'extraction (11), l'évaporateur (12) et le condenseur (13) sont des composants distincts interconnectés de manière opérationnelle par un circuit de tuyauterie (11a, 11b, 20, 24, 13b, 14, 14a).

3. Appareil selon la revendication 1 dans lequel l'évaporateur (12) et le condenseur (13) sont constitués comme des parties du même récipient évaporateur/condenseur (40), et le récipient d'extraction est un composant distinct connecté de manière opérationnelle au récipient évaporateur/condenseur (40) par un circuit de tuyauterie.

4. Appareil selon la revendication 3 dans lequel le récipient évaporateur/condenseur (40) est un récipient creux généralement clos (41) ayant des zones intérieures inférieure (42) et supérieure (43) espacées l'une de l'autre, la zone inférieure (42) comprenant l'évaporateur et la zone supérieure (43) comprenant le condenseur.

5. Appareil selon la revendication 4 dans lequel la zone inférieure comprend en son intérieur une alimentation (46) pour le mélange extrait/solvant liquide ; une source de chaleur (47) pour chauffer le mélange extrait/solvant liquide pour évaporer le solvant de l'extrait ; et une purge (50) pour vidanger l'extrait liquide du récipient évaporateur/condenseur.

6. Appareil selon la revendication 5 dans lequel la source de chaleur est ou comprend une chemise de chauffage (47) ou un élément fixé sur ou entourant une partie de l'extérieur du récipient évaporateur/condenseur (41) adjacente ou correspondant à la zone inférieure (42).

7. Appareil selon la revendication 4 ou toute revendication en dépendant, dans lequel la zone supérieure (43) comprend un refroidisseur (52) qui refroidit une ou plusieurs surfaces (55) dans la zone supérieure ; un réceptacle (57) plus bas que la surface et situé de manière à collecter le solvant liquide, condensé sur la surface (55), qui tombe de la surface sous l'action de la gravité ; et une purge (50) pour vidanger le solvant liquide du réceptacle.

8. Appareil selon la revendication 7 dans lequel le refroidisseur comprend une chemise (52) ou un élément fixé sur ou entourant une partie de l'extérieur du récipient (41) adjacente ou correspondant à la zone supérieure (43), une paroi intérieure (55) de la zone supérieure, refroidie par la chemise ou l'élément de refroidissement, étant ou comprenant ladite surface et le réceptacle comprenant un plateau (57) dépassant de ladite paroi à l'intérieur du récipient.

9. Appareil selon la revendication 8 dans lequel la zone supérieure (43) a une section transversale cylindrique et le plateau (57) est un espace annulaire dépassant de et s'étendant près de la paroi intérieure de la zone supérieure (43).

10. Appareil selon la revendication 7 dans lequel le refroidisseur comprend un élément de refroidissement (60) à l'inférieur de la zone supérieure ; l'élément de refroidissement comprenant ladite surface ; et le réceptacle (57') sous-jacent à l'élément de refroidissement.

11. Appareil selon l'une quelconque des revendications 7 à 10 dans lequel la chemise (52) ou l'élément de refroidissement (60) comprend un ou plusieurs passages internes permettant l'écoulement au travers d'un fluide de refroidissement.

12. Appareil selon l'une quelconque des revendications 7 à 11 dans lequel la purge (50) traverse une paroi du récipient évaporateur/condenseur (41) et dans lequel le circuit en boucle fermée comprend la zone inférieure (42), la zone supérieure (43) et la purge (50), connectés de manière opérationnelle en série.

13. Appareil selon la revendication 4 ou toute revendication en dépendant, dans lequel les zones inférieure (42) et supérieure (43) sont espacées l'une de l'autre par une barrière généralement imperméable au liquide et perméable au gaz (59).

14. Appareil selon la revendication 5 dans lequel la source de chaleur est ou comprend un élément chauffant (72) à l'intérieur du récipient évaporateur/condenseur (41).

15. Appareil selon la revendication 3 ou toute revendication en dépendant, comprenant une pompe à chaleur directe pour évaporer et condenser le solvant.

16. Appareil selon l'une quelconque des revendications précédentes, dans lequel les moyens pour moyens pour déplacer le solvant liquide depuis le condenseur vers le récipient d'extraction comprennent une pompe à liquide (14) connectée de manière opérationnelle en série dans le circuit en boucle fermée entre le condenseur (13) et le récipient d'extraction (11).

17. Procédé pour extraire la biomasse comprenant les étapes consistant à :
charger un lit de biomasse dans un récipient d'extraction (11) ayant une entrée (11a) et une sortie (11b) et faisant partie d'un circuit en boucle fermée comprenant, connecté de manière opérationnelle en série, le récipient d'extraction (11), un évaporateur (12) et un condenseur (13) ;
mettre en contact la biomasse avec un solvant coulant autour de la boucle fermée, moyennant quoi l'extrait de biomasse est entraîné avec le solvant ;
déplacer le solvant. autour de la boucle fermée vers l'évaporateur (12) et évaporer le solvant pour séparer le solvant et l'extrait l'un de l'autre ;
déplacer le solvant vaporisé autour de la boucle fermée vers le condenseur (13) et le condenser sous forme liquide ; et
déplacer le solvant condensé autour de la boucle fermée via un lut liquide connecté de manière opérationnelle en série avec le condenseur (13) vers le récipient d'extraction (11) pour plus de contact avec la biomasse à l'intérieur, dans lequel le solvant sous forme de vapeur est généralement non comprimé ; et dans lequel le procédé comprend l'étape consistant à permettre au solvant liquide condensé de se déplacer sous l'action de la gravité entre le condenseur (13) et le récipient d' extraction (11).

18. Procédé selon la revendication 17 dans lequel les étapes consistant à évaporer et condenser le solvant ont lieu à l'intérieur du même récipient creux (41).

19. Procédé selon la revendication 18 comprenant l'étape consistant à actionner une pompe à chaleur directe pour effectuer lesdites évaporation et condensation.

20. Procédé selon l'une quelconque des revendications 17 à 19 comprenant l'étape consistant à emballer la biomasse dans le récipient d'extraction (11).

21. Procédé selon l'une quelconque des revendications 17 à 20 comprenant l'étape consistant à retirer l'extrait de biomasse de l'évaporateur (12).
